# EUROPÄISCHE PATENTSCHRIFT

(11) **EP 2 848 545 B1**
(45) Veröffentlichungstag und Bekanntmachung des Hinweises auf die Patenterteilung: **25.05.2016**
(21) Anmeldenummer: 14178683.0
(22) Anmeldetag: 28.07.2014
(51) Int. Cl.: B65C 9/10, F16B 9/02, F16B 7/14

(54) **Etikettenmagazin für ein Etikettieraggregat und Etikettiermaschine**
Label cartridge for a labelling device and labelling machine
Cartouche d'étiquettes pour un poste d'étiquetage et étiqueteuse

(30) Priorität: 12.09.2013 DE 202013104147 U
(43) Veröffentlichungstag der Anmeldung: 18.03.2015
(73) Patentinhaber: Krones AG, 93073 Neutraubling (DE)
(72) Erfinder: Stoiber, Christian, 93073 Neutraubling (DE); Scheibenpflug, Robert, 93073 Neutraubling (DE)
(74) Vertreter: Grünecker Patent- und Rechtsanwälte PartG mbB

(56) Entgegenhaltungen:
- DE-A1- 19 941 377
- DE-U- 7 311 193
- DE-U1- 29 901 260

## Beschreibung

Die Erfindung betrifft ein Etikettenmagazin für ein Etikettieraggregat nach dem Oberbegriff des Anspruchs 1 und eine Etikettiermaschine nach Anspruch 10.

### Stand der Technik

Gemäß dem Stand der Technik werden Etikettenmagazine bei Kaltleimaggregaten von oben senkrecht gleichzeitig auf zwei oder drei Stehbolzen eines Etikettieraggregats aufgesetzt, wobei die Stehbolzen von entsprechenden Befestigungselementen des Etikettenmagazins vollumfänglich aufgenommen werden und dort festgeklemmt werden können. Für eine Entnahme des Etikettenmagazins muss das Etikettenmagazin senkrecht von den zwei oder drei Stehbolzen abgehoben werden. Der Hubweg, der ein Bediener zu überwinden hat, ergibt sich somit aus der Länge der Stehbolzen.

Da Hilfs-Hebeeinrichtungen aufgrund des begrenzten Platzangebots in der Umgebung der Etikettiermaschine und des Etikettieraggregats nicht verwendbar sind, muss ein Austausch von Etikettenmagazinen von Bedienern manuell durchgeführt werden. Dies ist wegen des Gewichts eines Etikettenmagazins von 10 kg bis 20 kg für einen Bediener mühsam und ergonomisch ungünstig, vor allem wegen der vergleichsweise großen vertikalen Anhebe- und Absenkbewegungswege, wenn das Etikettenmagazin über die Höhe der Stehbolzen angehoben werden muss, um das Etikettenmagazin aus einem Etikettieraggregat zu entfernen oder in ein Etikettieraggregat einzusetzen. Zudem können die Stehbolzen in den Befestigungselementen verklemmen, wenn das Etikettenmagazin beim Aufsetzen bzw. Abheben nicht senkrecht, sondern leicht verkippt bewegt wird. Insbesondere, wenn mehrere Etikettenmagazine in dem Etikettieraggregat übereinander angeordnet sind, sind die Stehbolzen entsprechend lang, um alle Etikettenmagazine aufnehmen zu können. Die Etikettenmagazine müssen in so einem Fall jeweils sehr hoch angehoben werden, um sie von den Stehbolzen zu entfernen bzw. sie auf die Stehbolzen aufzusetzen.

Ein gattungsgemäßes Etikettenmagazin ist aus der DE 299 01 260 U1 bekannt.

DE 299 01 260 U1 offenbart zweiteilige Etikettenkästen, wobei ein vorderer und ein hinterer Teil eines Etikettenkasten in einer im Wesentlichen horizontalen Bewegungsebene austauschbar gelagert sind, so dass bei übereinander angeordneten Etikettenkästen jeder vordere Teil unabhängig von der horizontalen Position des anderen vorderen Teils von dem hinteren Teil austauschbar gelagert ist. Dafür sind beispielsweise Aufsteckkörper mit einer U-förmigen Ausnehmung vorgesehen, die in einer horizontalen Ebene gegen senkrechte Säulen als Anschlag in der horizontalen Ebene aufschiebbar sind. In der Aufschiebhöhe sind zudem Aufnahmeelemente mit einer aufgerichteten Nase vorgesehen, auf die ein hinterer Teil eines Etikettenkastens absenkbar ist, so dass der Aufsteckkörper einrastet und sicher fixiert ist. Zur Entnahme des hinteren Teils des Etikettenkastens muss dieser nur geringfügig angehoben werden, so dass die Nase ihn freigibt, so dass der Teil des Etikettenkastens in horizontaler Ebene entnommen werden kann.

### Aufgabe der Erfindung

Der Erfindung liegt die Aufgabe zugrunde, ein Etikettenmagazin zur Verfügung zu stellen, das in ein Etikettieraggregat im Wesentlichen seitlich einbringbar bzw. aus einem Etikettieraggregat im Wesentlichen seitlich entnehmbar ist, so dass ein unergonomisches Anheben des Etikettenmagazins vermieden werden kann.

### Lösung

Die Aufgabe wird erfindungsgemäß gelöst durch das Etikettenmagazin nach Anspruch 1 und die Etikettiermaschine nach Anspruch 10. Bevorzugte Ausführungsformen sind in den Unteransprüchen offenbart.

Im Allgemeinen kann in einem Etikettenmagazin ein Etikettenstapel aus Blattetiketten aufgenommen werden, der beispielsweise mittels eines Schiebers in Richtung auf ein Ende des Etikettenmagazins zu geschoben wird, so dass die Blattetiketten in weiteren Prozessschritten von dort übernommen und auf Behälter aufgebracht werden können. Das Etikettenmagazin stellt also einen Vorrats- und Bereitstellungsbehälter für benötigte Blattetiketten dar.

Ein erfindungsgemäßes Etikettenmagazin für ein Etikettieraggregat ist mit mindestens zwei Klemmelementen ausgestattet, jeweils umfassend eine Klemmschelle mit einer Durchgangsöffnung über eine gesamte Höhe der Klemmschelle, wobei die Klemmschelle jeweils dazu ausgelegt ist, mit einem Stehbolzen des Etikettieraggregats durch Bewegen des Etikettenmagazins insbesondere in einer Ebene senkrecht zu einer Längsachse des Stehbolzens in Eingriff mit dem Stehbolzen gebracht zu werden durch ein Einbringen des Stehbolzens durch die Durchgangsöffnung der Klemmschelle hindurch bzw. aus Eingriff mit dem Stehbolzen gebracht zu werden durch Ausbringen des Stehbolzens durch die Durchgangsöffnung der Klemmschelle hindurch. Die mindestens zwei Klemmelemente umfassen jeweils ein Klemmstück und einen Klemmhebel, wobei der Klemmhebel weiter einen Exzenter umfasst, der dazu ausgelegt ist, bei einem Feststellen des Klemmhebels, d.h. in der Feststell-Position, auf das Klemmstück zu drücken und bei einem Lösen des Klemmhebels, d.h. in der Lös-Position, nicht auf das Klemmstück zu drücken.

Statt einer Bewegung in der Ebene senkrecht zu der Längsachse des Stehbolzens, um das Etikettenmagazin in Eingriff mit dem Stehbolzen zu bringen, kann es auch mit einer Schwenkbewegung in diese Ebene bewegt werden. In jedem Fall ist in der Ebene eine im Wesentlichen geradlinige Bewegung oder eine Schwenkbewegung für den Eingriff möglich.

Das Vorhandensein der Durchgangsöffnung bildet eine Klemmschelle, welche ein seitliches Entnehmen des Etikettenmagazins aus dem Etikettieraggregat durch Bewegen des Etikettenmagazins in einer Ebene senkrecht zur Längsachse der Stehbolzen ermöglicht. Ein Anheben um die Höhe des Stehbolzens wie beim Stand der Technik, in dem die Stehbolzen von Befestigungselementen des Etikettenmagazins vollumfänglich aufgenommen werden, ist somit nicht erforderlich.

Vorzugsweise sind die Klemmschellen mit den Durchgangsöffnungen derart am Etikettenmagazin angeordnet, dass das Etikettenmagazin durch Bewegen entlang seiner Längsachse in Eingriff bzw. aus Eingriff mit den Stehbolzen des Etikettieraggregats gebracht werden kann.

Um einen Stehbolzen in eine Klemmschelle einbringen bzw. ausbringen zu können, ist die Breite der Durchgangsöffnung größer als der Durchmesser des Stehbolzens. Vorzugsweise ist hierbei die Breite der Durchgangsöffnung 0,5 mm, 0,8 mm oder 1 mm größer als der Durchmesser des Stehbolzens; die Breite der Durchgangsöffnung kann auch weniger als 0,5 mm größer als der Durchmesser des Stehbolzens oder mehr als 1 mm größer als der Durchmesser des Stehbolzens sein. Die Breite der Durchgangsöffnung kann größer oder gleich groß sein wie ein Klemmdurchmesser der Klemmschelle. Um den Stehbolzen mittels der Klemmschelle in einer festen Positionierung halten zu können, so dass Etikettenmagazin und Etikettieraggregat eine feste Relativposition auch während des Betriebs einer Etikettiermaschine behalten, ist es erforderlich, dass der Klemmdurchmesser der Klemmschelle dem Durchmesser des Stehbolzens angepasst ist. Der Klemmdurchmesser der Klemmschelle ist im Allgemeinen geringfügig größer als der Durchmesser des Stehbolzens. Vorzugsweise ist der Klemmdurchmesser 0,25 mm, 0,5 mm oder 0,75 mm größer als der Durchmesser des Stehbolzens; der Klemmdurchmesser kann auch weniger als 0,25 mm größer als der Durchmesser des Stehbolzens oder mehr als 0,75 mm größer als der Durchmesser des Stehbolzens sein.

Mittels des Klemmstücks und des Klemmhebels kann ein eingebrachter Stehbolzen fest, aber lösbar, in der Klemmschelle positioniert werden, wobei auch die Innenfläche der Klemmschelle zumindest teilweise zu der Positionierung des Stehbolzens beiträgt. Vorzugsweise kann in einer Feststell-Position der Klemmhebel derart auf das Klemmstück einwirken, dass das Klemmstück zumindest teilweise über das Niveau der Innenseite der Klemmschelle hinausragt und dabei zumindest teilweise in Kontakt mit der Oberfläche des Stehbolzens kommt, so dass der Stehbolzen durch die auf ihn wirkende Druckkraft und durch Kontakt mit einem Teil der Innenseite der Klemmschelle in der Klemmschelle festgehalten wird. In einer Lös-Position des Klemmhebels wirkt der Klemmhebel nicht mehr auf das Klemmstück ein, so dass das Klemmstück nicht mehr über das Niveau der Innenseite der Klemmschelle hinausragt. Somit ist das Klemmstück auch nicht mehr zumindest teilweise in Kontakt mit der Oberfläche des eingebrachten Stehbolzens, und der Stehbolzen wird nicht mehr in der Klemmschelle festgehalten, sondern kann durch ein seitliches Bewegen des Etikettenmagazins aus der Klemmschelle entfernt werden.

Mittels des Exzenters kann eine Druckkraft auf das Klemmstück und infolgedessen von dem Klemmstück auf einen in der Klemmschelle befindlichen Stehbolzen ausgeübt werden.

Der Klemmhebel kann seitlich an der Klemmschelle drehbar gelagert sein. Vorzugsweise ist die Drehachse parallel zu einer Längsachse der Klemmschelle angeordnet. Somit kann der Klemmhebel in einer Lös-Position und in einer Feststell-Position angeordnet werden, und der Klemmhebel ist auch dann für einen Bediener gut zugänglich, wenn das Etikettenmagazin bereits in das Etikettieraggregat eingebaut bzw. eingebracht ist. In der Lös-Position kann ein eingebrachter Stehbolzen aus der Klemmschelle entfernt bzw. ein Stehbolzen in die Klemmschelle eingebracht werden, und in der Feststell-Position ist der eingebrachte Stehbolzen fest, aber lösbar, in der Klemmschelle positioniert, so dass das Etikettenmagazin fest, aber lösbar, mit dem Etikettieraggregat verbunden ist.

Die Klemmschelle kann einen im Wesentlichen U-förmigen Querschnitt aufweisen. Die Durchgangsöffnung kann von den beiden Schenkeln des U begrenzt werden, und der Bogen des U kann einen Durchmesser aufweisen, der größer ist als der Durchmesser des Stehbolzens der darin aufgenommen werden soll. Der Durchmesser des Bogens kann somit mit einem Klemmdurchmesser der Klemmschelle gleichgesetzt werden. Vorzugsweise ist der Durchmesser des Bogens 0,25 mm, 0,5 mm oder 0,75 mm größer als der Durchmesser des Stehbolzens; der Durchmesser des Bogens kann auch weniger als 0,25 mm größer als der Durchmesser des Stehbolzens oder mehr als 0,75 mm größer als der Durchmesser des Stehbolzens sein. Durch den U-förmigen Querschnitt kann ein Stehbolzen gut in die Klemmschelle eingebracht werden und sich an den Bogen der Klemmschelle anlegen, so dass ein sicheres Positionieren des Stehbolzens in der Klemmschelle möglich ist.

Das Klemmstück kann kegelstumpfförmig ausgebildet und in einer kegelstumpfförmigen Durchgangsbohrung in der Klemmschelle angeordnet sein, wobei eine Manteloberfläche des Klemmstücks, eine Oberfläche der Durchgangsbohrung und der Klemmhebel derart zusammenwirken, dass das Klemmelement in der Durchgangsbohrung gehalten wird.

Durch diese aufeinander abgestimmte Dimensionierung ergibt sich eine Verliersicherung für das Klemmelement, so dass es nicht aus der Durchgangsbohrung in der Klemmschelle fallen und verloren gehen kann. Vorzugsweise ist das Klemmstück derart dimensioniert, dass es, wenn der Exzenter des Klemmhebels auf das Klemmelement drückt, zumindest teilweise über das Niveau der Innenseite der Klemmschelle hinausragt.

Die kegelstumpfförmige Form der Durchgangsbohrung in der Klemmschelle ist vorzugsweise so ausgebildet, dass die kleinere Grundfläche des Kegelstumpfs zu der Innenseite der Klemmschelle und die größere Grundfläche zu der Außenseite der Klemmschelle weist, d.h. in Richtung des Klemmhebels. In der Durchgangsbohrung befindet sich das kegelstumpfförmige Klemmstück. Vorzugsweise ist das Klemmstück derart geformt, dass es von dem Exzenter des Klemmhebels an der größeren Grundfläche des Klemmstücks erreichbar ist, dass es im Inneren der Durchgangsbohrung zumindest über eine gewisse Strecke frei beweglich ist und dass es in einer Feststell-Position des Klemmhebels über das Niveau der Innenseite der Klemmschelle herausragt und in einer Lös-Position unterhalb des Niveaus der Innenseite der Klemmschelle angeordnet ist.

In einer anderen Ausführungsform können das Klemmstück und die Durchgangsbohrung in der Klemmschelle eine pyramidenstumpfförmige Form aufweisen; beispielweise mit einer quadratischen oder einer dreieckigen Grundfläche.

Das Klemmstück kann zumindest teilweise aus einem elastischen Material bestehen. Das elastische Material sorgt in einer Feststell-Position des Klemmhebels dafür, dass sich dass Klemmstück zumindest teilweise an die Oberfläche des Stehbolzens anlegen und dadurch für eine gute Positionierung des Stehbolzens in der Klemmschelle sorgen kann. Zudem kann das Klemmelement in der Feststell-Position die Druckkraft des Exzenters auf den Stehbolzen übertragen, so dass der Stehbolzen auch an einen Teil der Innenseite der Klemmschelle gedrückt wird. Beispielsweise kann das Klemmelement im Innern aus einem Metallkern bestehen, der von einem Mantel aus elastischem Material umgeben ist oder das Klemmelement kann ganz aus elastischem Material bestehen. Das Klemmelement kann auch aus einem oder mehreren elastischen Materialien bestehen. Dabei kann beispielsweise ein erstes elastisches Material in einem ersten Volumenbereich, das die größere Grundfläche umgibt weniger elastisch sein als ein zweites elastisches Material in einem zweiten Volumenbereich, das die kleinere Grundfläche umgibt. Die höhere Elastizität im zweiten Volumenbereich kann für ein besseres Anlegen des Klemmelements an den Stehbolzen sorgen.

Das Klemmstück kann derart außermittig zu einem Klemmdurchmesser der Klemmschelle angeordnet sein, dass das Klemmstück mit einem Stehbolzen des Etikettieraggregats derart zusammenwirken kann, dass bei einem Feststellen des Klemmhebels der Stehbolzen durch eine auf ihn wirkende Druckkraft des Klemmstücks in die Klemmschelle gedrückt wird. Durch die außermittige Anordnung drückt das Klemmelement so aus einer Richtung auf den Stehbolzen, dass er beispielsweise an die gebogene Innenseite der Klemmschelle gedrückt wird.

Die Klemmschelle kann an einer Innenseite eine Ansenkung umfassen, die dazu ausgelegt ist, ein Distanzrohr, das auf einen Stehbolzen aufgesteckt ist, zumindest teilweise aufzunehmen und derart mit dem Distanzrohr zusammenzuwirken, dass eine Zentrierung des Etikettenmagazins zu dem Distanzrohr erfolgt. Die Ansenkung kann dabei derart in einem Kantenbereich zwischen Innenseite und Unterseite der Klemmschelle im Bogen des U, falls die Klemmschelle einen U-förmigen Querschnitt aufweist, angeordnet sein, dass für das zumindest teilweise Aufnehmen des Distanzrohrs, zusätzlich zu dem Bewegen des Etikettenmagazins in einer Ebene senkrecht zu der Längsachse der Stehbolzen des Etikettieraggregats ein Anheben des Etikettenmagazins parallel zu der Längsachse um die Höhe der Ansenkung erforderlich ist. Auf den Stehbolzen in einem Etikettieraggregat sind Distanzrohre jeweils der gleichen Länge vorgesehen, damit die Höhe, in der ein Etikettenmagazin angeordnet wird, vorgebbar ist. Durch das Aufbringen des Etikettenmagazins auf das Distanzrohr, das in die Ansenkung der Klemmschelle eingreift, wird eine Zentrierung des Etikettenmagazins zu dem Distanzrohr und somit zu dem Etikettieraggregat erreicht. Das Distanzrohr weist im Allgemeinen einen Durchmesser auf, der größer ist als der Durchmesser des Stehbolzens, und weist eine erforderliche Länge auf, um eine vorgegebene Höheneinstellung des Etikettenmagazins in dem Etikettieraggregat zu gewährleisten. Die Ansenkung an der Innenseite der Klemmschelle weist daher vorzugsweise einen Durchmesser auf, der geringfügig größer, beispielsweise in einem Bereich von 0,2 mm bis 0,5 mm, ist als der Durchmesser des Distanzrohrs.

Die Klemmschelle kann in einem Bereich der Durchgangsöffnung auf einer Innenseite einen Vorsprung aufweisen. Der Vorsprung kann sich über die gesamte Höhe oder über einen Teil der Höhe der Klemmschelle erstrecken und so zusammen mit dem Klemmelement in einer Feststell-Position des Klemmhebels dafür sorgen, dass ein Stehbolzen fest in der Klemmschelle gehalten werden kann.

Das Etikettenmagazin kann drei Klemmelemente umfassen. Dies ist vorteilhaft, da viele der gängigen Etikettieraggregate drei Stehbolzen aufweisen, an denen ein Etikettenmagazin befestigt werden soll. Weitere Klemmelemente sind aber ebenso denkbar.

Weiter betrifft die Erfindung eine Etikettiermaschine mit mindestens einem Etikettieraggregat und mindestens einem Etikettenmagazin wie oben oder weiter unten beschrieben.

Ein Verfahren zum Einbringen eines Etikettenmagazins, wie oben oder weiter unten beschrieben, in ein Etikettieraggregat, umfasst die Schritte:
- Bewegen des Etikettenmagazins in einer Ebene senkrecht zu einer Längsachse von Stehbolzen, die von dem Etikettieraggregat umfasst werden und
- in Eingriffbringen der Klemmschellen mit den Stehbolzen durch ein Einbringen der Stehbolzen durch die Durchgangsöffnungen der Klemmschellen hindurch.

Umfasst das Etikettenmagazin Klemmhebel, so kann in einem weiteren Schritt ein Feststellen der Klemmhebel erfolgen.

Umfasst das Etikettenmagazin an einer Innenseite eine Ansenkung, so können die folgenden Schritte ausgeführt werden:
- Anheben des Etikettenmagazins um zumindest eine Höhe der Ansenkung und
- Absenken des Etikettenmagazins für eine zumindest teilweise Aufnahme eines Distanzrohrs durch die Ansenkung.

Distanzrohre sind aber nicht zwingend erforderlich, um die Klemmhebel an den Stehbolzen fest anzuordnen. Den Abstand zwischen verschiedenen Etikettenmagazinen einzuhalten ist auch ohne diese Distanzrohre möglich.

Danach kann in einem weiteren Schritt ein Feststellen der Klemmhebel erfolgen.

Ein Verfahren zum Ausbringen eines Etikettenmagazins, wie oben oder weiter unten beschrieben, das Klemmhebel umfasst, aus einem Etikettieraggregat, umfasst die folgenden Schritte:
- Lösen der Klemmhebel,
- aus Eingriffbringen der Klemmschellen mit Stehbolzen, die von dem Etikettieraggregat umfasst werden, durch ein Ausbringen der Stehbolzen durch die Durchgangsöffnungen der Klemmschellen hindurch, und
- Bewegen des Etikettenmagazins in einer Ebene senkrecht zu einer Längsachse der Stehbolzen.

Umfasst das Etikettenmagazin an einer Innenseite eine Ansenkung, so kann das Verfahren weiter den Schritt eines Anhebens des Etikettenmagazins um zumindest eine Höhe der Ansenkung umfassen.

### Kurze Figurenbeschreibung

Weitere Vorteile und Ausführungsformen ergeben sich aus den beigefügten Zeichnungen. In den Zeichnungen zeigt:
Figur 1 eine schematische Draufsicht auf ein von Stehbolzen eines Etikettieraggregats gelöstes Etikettenmagazin,
Figur 2 eine schematische Draufsicht auf das Etikettenmagazin aus Figur 1, das mit den Stehbolzen des Etikettieraggregats mittels Klemmelementen verbunden ist,
Figur 3 eine schematische Schrägansicht von oben auf ein Klemmelement,
Figur 4 eine schematische Schrägansicht von unten auf das Klemmelement aus Figur 3,
Figur 5a einen schematischen Längsschnitt durch ein Klemmelement mit einem Klemmhebel in Lös-Position,
Figur 5b einen schematischen Längsschnitt durch ein Klemmelement mit einem Klemmhebel in Feststell-Position,
Figur 6 eine schematische Schrägansicht des auf einen Bolzen geschobenen Klemmelements und
Figur 7 eine schematische Schrägansicht des auf ein Distanzrohr des Bolzen aufgebrachtes Klemmelement.

### Ausführliche Figurenbeschreibung

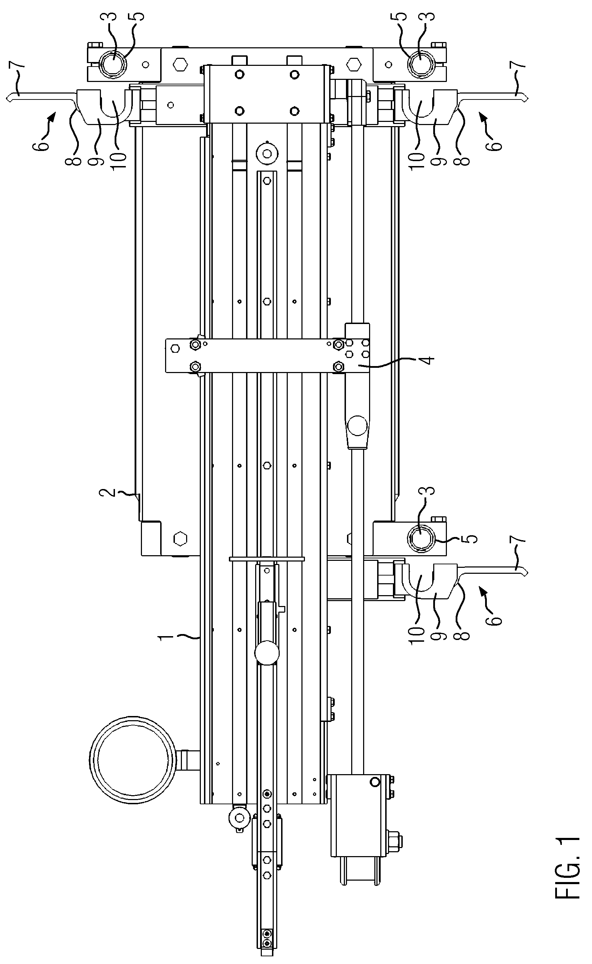

Figur 1 zeigt eine schematische Draufsicht auf ein von Stehbolzen 3 eines Etikettieraggregats 2 gelöstes Etikettenmagazin 1. Mittels des Etikettenmagazins 1 kann ein Etikettenstapel aus Blattetiketten aufgenommen werden, der mittels eines Schiebers 4 in Richtung auf ein Ende des Etikettenmagazins 1 zu geschoben wird, so dass die Blattetiketten in weiteren Prozessschritten von dort übernommen und auf Behälter aufgebracht werden können. Um verschiedene Typen von Etiketten verwenden zu können, kann ein Austausch eines Etikettenmagazins 1 erforderlich sein, weshalb ein Etikettenmagazin 1 lösbar mit dem Etikettieraggregat 2 verbunden sein sollte. In der Darstellung sind die drei Stehbolzen 3 mit den auf ihnen jeweils aufgesteckten Distanzrohren 5 Teil des Etikettieraggregats 2. Das Etikettenmagazin 1 umfasst drei Klemmelemente 6, die so angeordnet sind, dass sie in Eingriff mit den entsprechenden Stehbolzen 3 bzw. Distanzrohren 5 des Etikettieraggregats 2 gebracht werden können.

Durch ein Bewegen des Etikettenmagazins 1 in eine Ebene senkrecht zu einer Längsachse der Stehbolzen können die Klemmschellen 9 mit den Stehbolzen 3 in Eingriff gebracht werden, durch ein Einbringen der Stehbolzen 3 durch die Durchgangsöffnungen 10 der Klemmschellen 9 hindurch. Um die Distanzrohre 5 durch die (nicht sichtbaren) Ansenkungen der Klemmschellen 9 zumindest teilweise aufnehmen zu können, ist zudem ein Anheben des Etikettenmagazins 1 um zumindest die Höhe der Ansenkungen erforderlich. Für die Aufnahme der Distanzrohre durch die Ansenkungen wird das Etikettenmagazin 1 dann auf die Distanzrohre abgesenkt. Um das Etikettenmagazin 1 mit den Stehbolzen 3 des Etikettieraggregats 2 fest, aber lösbar, zu verbinden, werden die Klemmhebel 7 festgestellt, d.h. in eine Feststellposition verbracht.

Ein Klemmelement 6 umfasst einen Klemmhebel 7 mit einem Exzenter 8, eine Klemmschelle 9 mit einer Durchgangsöffnung 10 über die gesamte Höhe der Klemmschelle 9 und entlang eines Teils des Umfangs und ein Klemmelement (nicht sichtbar). In Figur 1 befinden sich die Klemmhebel 7 in einer Lös-Position, so dass die Stehbolzen 3 bzw. die Distanzrohre 5 in die im Wesentlichen U-förmigen Klemmschellen 9 eingebracht werden können.

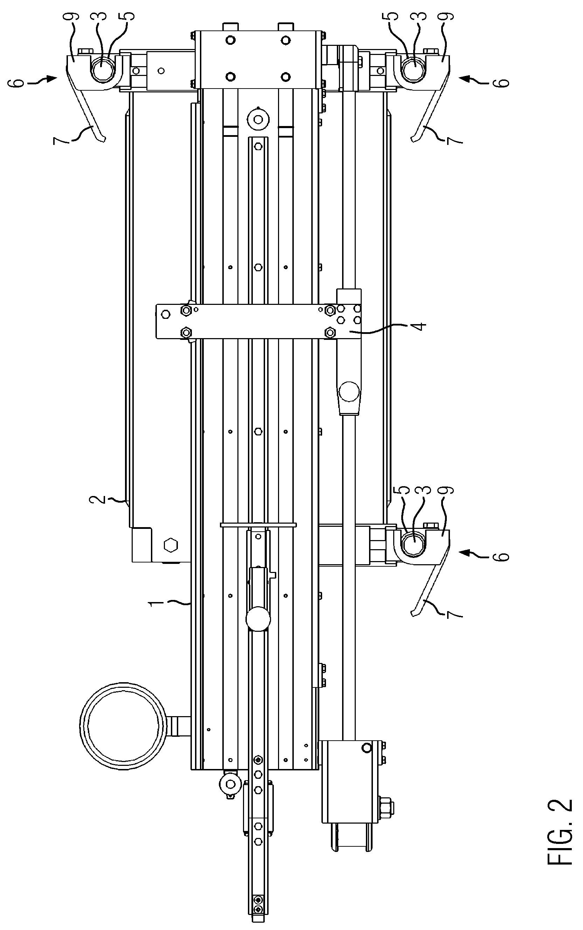

Figur 2 zeigt eine schematische Draufsicht auf das Etikettenmagazin 1 aus der Figur 1, das mit den Stehbolzen 3 bzw. den Distanzrohren 5 des Etikettieraggregats 2 mittels der drei Klemmelemente 6 in einer Feststell-Position verbunden ist, so dass sich das Etikettenmagazin 1 nicht selbstständig von den Stehbolzen 3 bzw. den Distanzrohren 5 des Etikettieraggregats 2 lösen kann.

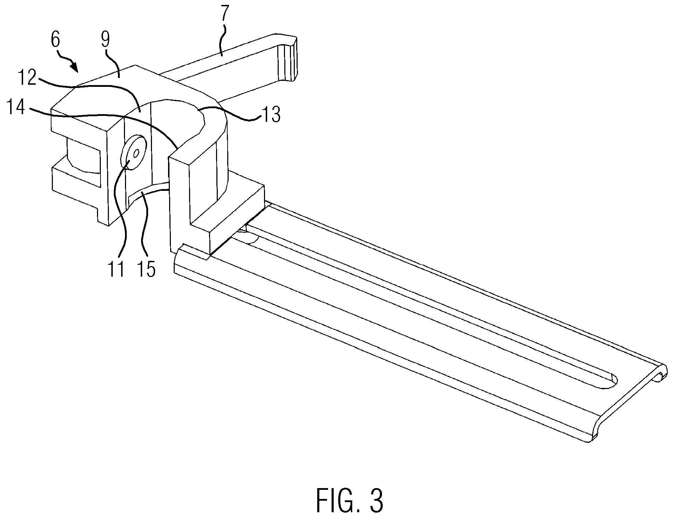

Figur 3 zeigt eine schematische Schrägansicht von oben auf ein Klemmelement 6, das einen Klemmhebel 7, eine Klemmschelle 9 und ein Klemmstück 11 umfasst. In der Darstellung befindet sich der Klemmhebel 7 in der Feststell-Position, wodurch mittels des (nicht sichtbaren) Exzenters ein Druck auf eine (nicht sichtbare) Seite des Klemmstücks 11 ausgeübt wird, so dass die gegenüberliegende Seite des Klemmstücks 11 über das Niveau der Innenseite 12 der Klemmschelle 9 hervorragt. Befindet sich ein Stehbolzen in der Klemmschelle 9, so kann das Klemmstück 11 zumindest auf einen Teil der Oberfläche des Stehbolzens eine Druckkraft ausüben.

Der Querschnitt der Klemmschelle 9 verläuft im Wesentlichen U-förmig, wobei der Durchmesser des Kreisbogens 13 geringfügig größer ist als der Durchmesser des Stehbolzens 3, der in eine solche Klemmschelle 9 eingebracht werden soll. Auf der Seite der Klemmschelle 9, auf der sich die Durchgangsbohrung für das Klemmelement 11 befindet, verläuft der U-förmige Schenkel gerade. Auf der anderen, gegenüberliegenden Seite der Klemmschelle 9 weist der Schenkel einen Vorsprung 14 auf. Dieser Vorsprung 14 sorgt zusammen mit dem Klemmelement 11 dafür, dass ein Stehbolzen 3 in einer Feststell-Position des Klemmhebels 7 nicht nur von dem Klemmelement 11 durch die Druckkraft Richtung Kreisbogen 13 gedrückt wird, sondern zudem von dem Vorsprung 14 in einer festen Position gehalten wird.

Teilweise sichtbar ist eine zylindrische Ansenkung 15 in einem Kantenbereich zwischen der Innenseite und der Unterseite der Klemmschelle 9, in die ein Distanzrohr 5, das auf einen Stehbolzen 3 aufgesteckt ist, zumindest teilweise eingebracht werden kann und in Zusammenwirkung mit dem Distanzrohr 5 für eine Zentrierung des Etikettenmagazins 1 sorgt.

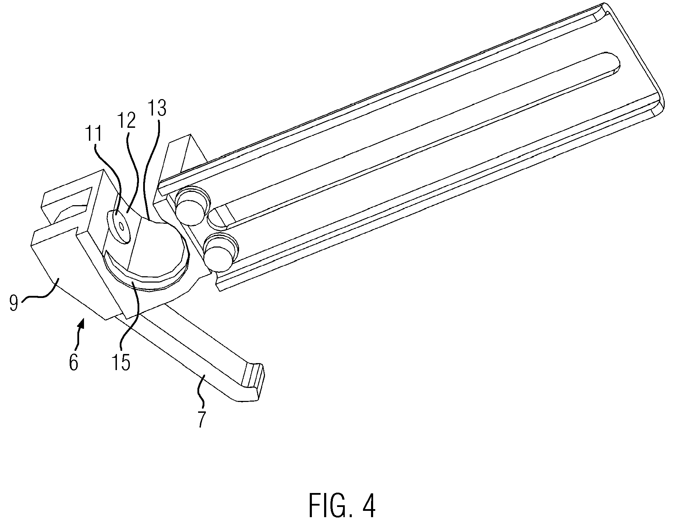

Diese zylindrische Ansenkung 15 ist in der schematischen Schrägansicht von unten auf das Klemmelement 9 in Figur 4 ganz zu sehen.

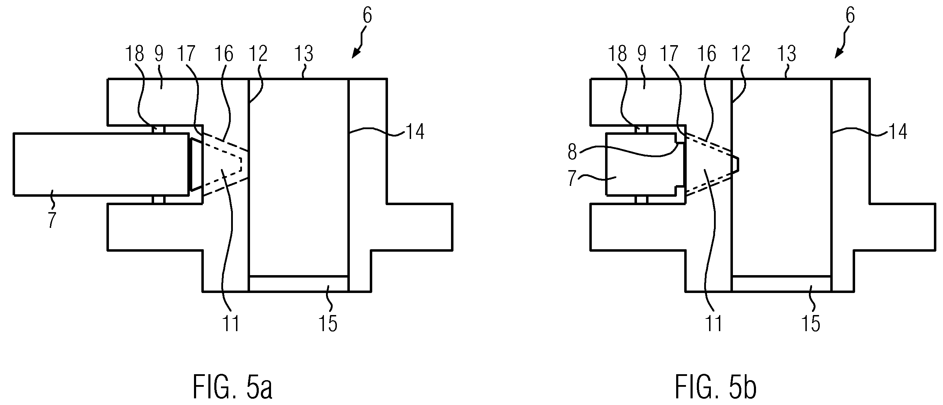

Figur 5a zeigt einen schematischen Längsschnitt durch ein Klemmelement 6, bei dem sich der Klemmhebel 7 in einer Lös-Position befindet. Zu sehen sind die Durchgangsbohrung 16 in der Klemmschelle 9, die eine kegelstumpfförmige Form aufweist, wobei die kleinere Grundfläche des Kegelstumpfs zu der Innenseite 12 der Klemmschelle 9 weist und die größere Grundfläche zu der Außenseite 17 der Klemmschelle 9 weist. In der Durchgangsbohrung 16 befindet sich das Klemmstück 11, das ebenfalls eine kegelstumpfförmige Form aufweist. Vorzugsweise ist das Klemmstück 11 so geformt, dass es von dem Exzenter 8 des Klemmhebels 7 an der größeren Grundfläche erreichbar ist, dass es im Inneren der Durchgangsbohrung 16 zumindest über eine gewisse Strecke frei beweglich ist und dass es in einer Feststell-Position des Klemmhebels 7 über das Niveau der Innenseite 12 der Klemmschelle 9 herausragt und in einer Lös-Position unterhalb des Niveaus der Innenseite 12 der Klemmschelle 9 angeordnet ist. Der Klemmhebel 7 ist um eine Drehachse 18 drehbar gelagert.

Figur 5b zeigt einen schematischen Längsschnitt durch das Klemmelement 6 mit dem Klemmhebel 7 in Feststell-Position. Der Exzenter 8 des Klemmhebels 7 drückt in dieser Feststell-Position auf die größere Grundfläche des Klemmstücks 11, wodurch das Klemmstück 11 im Inneren der Durchgangsbohrung 16 über eine gewisse Strecke bewegt wird, so dass das Klemmstück 11 über das Niveau der Innenseite 12 der Klemmschelle 9 herausragt.

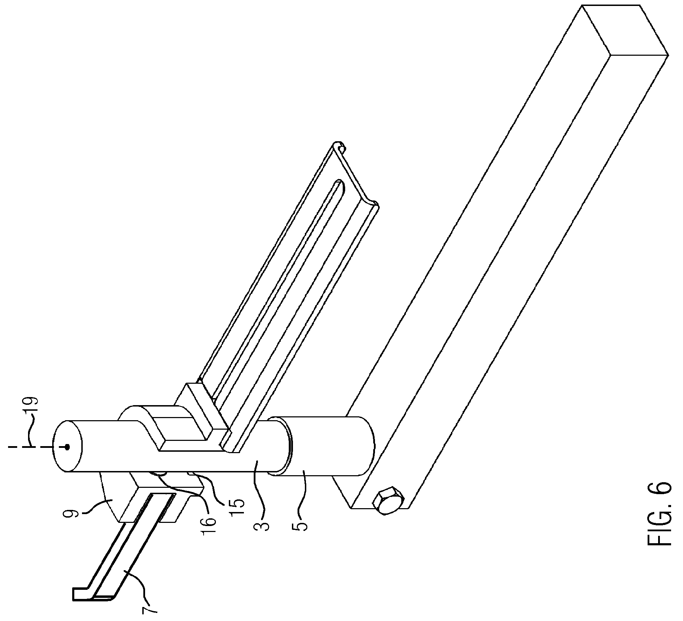

Figur 6 zeigt eine schematische Schrägansicht des auf einen Stehbolzen 3 geschobenen Klemmelements 6, bei dem der Klemmhebel 7 sich in der Lös-Position befindet, damit durch ein Bewegen des Etikettenmagazins 1 senkrecht zu der Längsachse 19 des Stehbolzens 3 ein Einbringen des Stehbolzens 3 in die Klemmschelle 9 möglich ist und auch ein Verschieben des Klemmelements 6 entlang des Stehbolzens 3, d.h. parallel zu seiner Längsachse 19, möglich ist, um die zylindrische Ansenkung 15 der Klemmschelle 9 auf das Distanzrohr 5 aufzubringen, so dass das Distanzrohr 5 zumindest teilweise von der Ansenkung 15 aufgenommen wird.

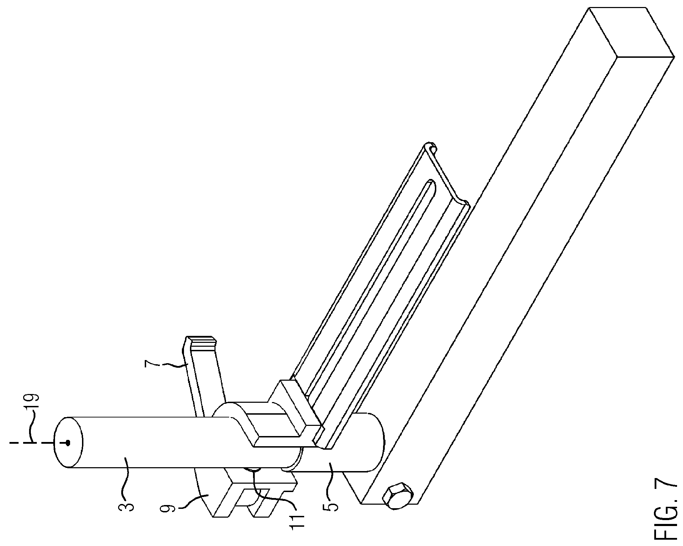

Figur 7 zeigt eine schematische Schrägansicht des auf das Distanzrohr 5 des Stehbolzens 3 aufgebrachten Klemmelements 6, bei dem der Klemmhebel 7 geschlossen ist, d.h. sich in der Feststell-Position befindet. Durch das Aufbringen auf das Distanzrohr 5, das zumindest teilweise in die Ansenkung 15 der Klemmschelle 9 eingreift, wird eine Zentrierung des Etikettenmagazins 1 zu dem Distanzrohr 5 und somit zu dem Etikettieraggregat 2 erreicht.

## Patentansprüche

1. Etikettenmagazin (1) für ein Etikettieraggregat (2), wobei das Etikettenmagazin (1) mit mindestens zwei Klemmelementen (6) ausgestattet ist, jeweils umfassend eine Klemmschelle (9) mit einer Durchgangsöffnung (10) über eine gesamte Höhe der Klemmschelle (9), wobei die Klemmschelle (9) jeweils dazu ausgelegt ist, mit einem Stehbolzen (3) des Etikettieraggregats (2) durch Verschieben des Etikettenmagazins (1), insbesondere in einer Ebene senkrecht zu einer Längsachse (19) des Stehbolzens (3) in Eingriff mit dem Stehbolzen (3) gebracht zu werden durch ein Einbringen des Stehbolzens (3) durch die Durchgangsöffnung (10) der Klemmschelle (9) hindurch bzw. aus Eingriff mit dem entsprechenden Stehbolzen (3) gebracht zu werden durch Ausbringen des Stehbolzens (3) durch die Durchgangsöffnung (10) der Klemmschelle (9) hindurch,
**dadurch gekennzeichnet, dass**
die mindestens zwei Klemmelemente (6) jeweils ein Klemmstück (11) und einen Klemmhebel (7) umfassen,
wobei der Klemmhebel (7) weiter einen Exzenter (8) umfasst, der dazu ausgelegt ist, bei einem Feststellen des Klemmhebels (7) auf das Klemmstück (11) zu drücken und bei einem Lösen des Klemmhebels (7) nicht auf das Klemmstück (11) zu drücken.

2. Etikettenmagazin nach Anspruch 1, wobei der Klemmhebel (7) seitlich an der Klemmschelle (9) drehbar gelagert ist.

3. Etikettenmagazin nach Anspruch 1 oder 2, wobei die Klemmschelle (9) einen im Wesentlichen U-förmigen Querschnitt aufweist.

4. Etikettenmagazin nach einem der Ansprüche 1 bis 3, wobei das Klemmstück (11) kegelstumpfförmig ausgebildet und in einer kegelstumpfförmigen Durchgangsbohrung (16) in der Klemmschelle (9) angeordnet ist, wobei eine Manteloberfläche des Klemmstücks (11), eine Oberfläche der Durchgangsbohrung (16) und der Klemmhebel (7) derart zusammenwirken, dass das Klemmelement (11) in der Durchgangsbohrung (16) gehalten wird.

5. Etikettenmagazin nach einem der Ansprüche 1 bis 4, wobei das Klemmstück (11) zumindest teilweise aus einem elastischen Material besteht.

6. Etikettenmagazin nach einem der Ansprüche 1 bis 5, wobei das Klemmstück (11) derart außermittig zu einem Klemmdurchmesser der Klemmschelle (9) angeordnet ist, dass das Klemmstück (11) mit einem Stehbolzen (3) des Etikettieraggregats (2) derart zusammenwirken kann, dass bei einem Feststellen des Klemmhebels (7) der Stehbolzen (3) durch eine auf ihn wirkende Druckkraft des Klemmstücks (11) in die Klemmschelle (9) gedrückt wird.

7. Etikettenmagazin nach einem der Ansprüche 1 bis 6, wobei die Klemmschelle (9) an einer Innenseite (12) eine Ansenkung (15) umfasst, die dazu ausgelegt ist, ein Distanzrohr (5), das auf einen Stehbolzen (3) aufgesteckt ist, zumindest teilweise aufzunehmen und derart mit dem Distanzrohr (5) zusammenzuwirken, dass eine Zentrierung des Etikettenmagazins (1) zu dem Distanzrohr (5) erfolgt.

8. Etikettenmagazin nach einem der Ansprüche 1 bis 7, wobei die Klemmschelle (9) in einem Bereich der Durchgangsöffnung (10) auf einer Innenseite (12) einen Vorsprung (14) aufweist.

9. Etikettenmagazin nach einem der Ansprüche 1 bis 8, wobei das Etikettenmagazin (1) drei Klemmelemente (6) umfasst

10. Etikettiermaschine mit mindestens einem Etikettieraggregat (2) und mindestens einem Etikettenmagazin (1) nach einem der Ansprüche 1 bis 9.

## Claims

1. Label cartridge (1) for a labeling device (2), wherein the label cartridge (1) is equipped with at least two clamping elements (6), each comprising a clamp (9) with a passage opening (10) over an entire height of the clamp (9), wherein the clamp (9) is respectively configured to be brought with a stud (3) of the labeling device (2) by displacement of the label cartridge (1), especially in a plane perpendicular to a longitudinal axis (19) of the stud (3), into engagement with the stud (3) by insertion of the stud (3) through the passage opening (10) of the clamp (9) or out of engagement with the corresponding stud (3) by ejection of the stud (3) through the passage opening (10) of the clamp (9),
**characterized in**
**that** at least two clamping elements (4) respectively comprise a clamp piece (11) and a clamp lever (7),
wherein the clamp lever (7) further comprises an eccentric (8) which is configured to press onto the clamp piece (11) upon locking of the clamp lever (7) and not to press onto the clamp piece (11) upon release of the clamp lever (7).

2. Label cartridge according to claim 1, wherein the clamp lever (7) is rotatably supported laterally on the clamp (9).

3. Label cartridge according to claim 1 or 2, wherein the clamp (9) has a substantially U-shaped cross-section.

4. Label cartridge according to any one of claims 1 to 3, wherein the clamp piece (11) has the shape of a truncated cone and is arranged in a truncated cone-shaped through hole (16) in the clamp (9), wherein an outer surface of the clamp piece (11), a surface of the through hole (16) and the clamp lever (7) cooperate such that the clamping element (11) is held in the through hole (16).

5. Label cartridge according to any one of claims 1 to 4, wherein the clamp piece (11) consists at least in part of an elastic material.

6. Label cartridge according to any one of claims 1 to 5, wherein the clamp piece (11) is eccentrically arranged with respect to a clamp diameter of the clamp (9) such that the clamp piece (11) can cooperate with a stud (3) of the labeling device (2) such that upon locking of the clamp lever (7) the stud (3) is pressed into the clamp (9) by a compressive force of the clamp piece (11) acting on the stud.

7. Label cartridge according to any one of claims 1 to 6, wherein the clamp (9) is provided on an inside (12) with a countersink (15) which is configured to receive at least in part a spacer tube (5) attached to a stud (3) and to cooperate with the spacer tube (5) such that the label cartridge (1) is centered with respect to the spacer tube (5).

8. Label cartridge according to any one of claims 1 to 7, wherein the clamp (9) comprises a protrusion (14) in an area of the passage opening (10) on an inside (12).

9. Label cartridge according to any one of claims 1 to 8, wherein the label cartridge (1) comprises three clamping elements (6).

10. Labeling machine with at least one labeling device (2) and at least one label cartridge (1) according to any one of claims 1 to 9.

## Revendications

1. Magasin d'étiquettes (1) pour un groupe ou poste d'étiquetage (2), le magasin d'étiquettes (1) étant équipé d'au moins deux éléments de serrage (6) comportant chacun un collier de serrage (9) avec une ouverture de passage (10) sur toute la hauteur du collier de serrage (9), magasin dans lequel le collier de serrage (9) est respectivement conçu pour être amené en prise avec une broche verticale fixe (3) correspondante de broches verticales fixes (3) du groupe d'étiquetage (2), par coulissement du magasin d'étiquettes (1), notamment dans un plan perpendiculaire à un axe longitudinal (19) de la broche verticale fixe (3), par une introduction de ladite broche verticale fixe (3) à travers l'ouverture de passage (10) du collier de serrage (9), ou respectivement pour être amené hors de prise avec la broche verticale fixe (3) correspondante, par extraction de la broche verticale fixe (3) à travers l'ouverture de passage (10) du collier de serrage (9),
**caractérisé**
**en ce que** lesdits au moins deux éléments de serrage (6) comportent chacun une pièce de serrage (11) et un levier de serrage (7),
le levier de serrage (7) comportant, en outre, un excentrique (8) qui est conçu pour appuyer sur la pièce de serrage (11) lors d'un blocage de serrage du levier de serrage (7), et pour ne pas appuyer sur la pièce de serrage (11) lors d'un déblocage du levier de serrage (7).

2. Magasin d'étiquettes selon la revendication 1, dans lequel le levier de serrage (7) est monté rotatif latéralement sur le collier de serrage (9).

3. Magasin d'étiquettes selon la revendication 1 ou la revendication 2, dans lequel le collier de serrage (9) présente une section transversale sensiblement en forme de U.

4. Magasin d'étiquettes selon l'une des revendications 1 à 3, dans lequel la pièce de serrage (11) est d'une configuration de forme tronconique et est agencée dans un alésage de passage (16) de forme tronconique dans le collier de serrage (9), et dans lequel une surface d'enveloppe de la pièce de serrage (11), une surface de l'alésage de passage (16) et le levier de serrage (7) interagissent de manière telle, que l'élément de serrage (11) soit maintenu dans l'alésage de passage (16).

5. Magasin d'étiquettes selon l'une des revendications 1 à 4, dans lequel la pièce de serrage (11) est réalisée au moins en partie en un matériau élastique.

6. Magasin d'étiquettes selon l'une des revendications 1 à 5, dans lequel la pièce de serrage (11) est agencée en étant décentrée par rapport à un diamètre de serrage du collier de serrage (9) de manière telle, que la pièce de serrage (11) puisse interagir avec une broche verticale fixe (3) du groupe d'étiquetage (2) de façon à ce que lors d'un blocage du levier de serrage (7), la broche verticale fixe (3) soit pressée dans le collier de serrage (9), par une force de compression de la pièce de serrage (11) agissant sur elle.

7. Magasin d'étiquettes selon l'une des revendications 1 à 6, dans lequel le collier de serrage (9) comporte, sur un côté intérieur (12), un décrochement (15) qui est configuré pour accueillir au moins partiellement un tube-entretoise (5) emmanché sur une broche verticale fixe (3), et pour interagir avec ce tube-entretoise (5) de manière à effectuer un centrage du magasin d'étiquettes (1) par rapport au tube-entretoise (5).

8. Magasin d'étiquettes selon l'une des revendications 1 à 7, dans lequel le collier de serrage (9) présente, dans une zone de l'ouverture de passage (10), sur un côté intérieur (12), une protubérance (14).

9. Magasin d'étiquettes selon l'une des revendications 1 à 8, dans lequel le magasin d'étiquettes (1) comporte au moins trois éléments de serrage (6).

10. Machine d'étiquetage ou étiqueteuse comprenant au moins un groupe d'étiquetage (2) et au moins un magasin d'étiquettes (1) selon l'une des revendications 1 à 9.
